## Europäisches Patentamt
## European Patent Office
## Office européen des brevets

(19)

(11) Veröffentlichungsnummer: **0 057 817**
**B1**

(12) **EUROPÄISCHE PATENTSCHRIFT**

(45) Veröffentlichungstag der Patentschrift:
**08.04.87**

(21) Anmeldenummer: **82100182.3**

(22) Anmeldetag: **13.01.82**

(51) Int. Cl.⁴: **G 07 C 5/12**

(54) **Fahrtschreiber.**

(30) Priorität: **09.02.81 DE 3104480**

(43) Veröffentlichungstag der Anmeldung:
**18.08.82 Patentblatt 82/33**

(45) Bekanntmachung des Hinweises auf die Patenterteilung:
**08.04.87 Patentblatt 87/15**

(84) Benannte Vertragsstaaten:
**CH DE FR GB IT LI**

(56) Entgegenhaltungen:
**DE-A-1 673 375**
**DE-A-2 026 513**
**DE-B-1 128 194**
**DE-B-1 232 379**
**DE-B-1 260 211**
**US-A-3 132 916**

(73) Patentinhaber: **Mannesmann Kienzle GmbH, Heinrich- Hertz- Strasse, D-7730 Villingen-Schwenningen (DE)**

(72) Erfinder: **Vögtlin, Karl, Mannheimerstrasse 9, D-7730 Villingen- Schwenningen (DE)**

EP 0 057 817 B1

## Beschreibung

Die Erfindung betrifft einen Fahrtschreiber mit einem geschwindigkeitsabhängig auslenkbaren Registrierorgan sowie mit einem auf betriebsbedingte Schwingungen eines Kraftfahrzeuges ansprechenden und unter der Wirkung einer Feder stehenden Rüttelpendel. Ein solcher Fahrtschreiber ist aus der DE-A-2 036 513 bekannt.

Die Aufgabe eines Fahrtschreibers besteht bekanntlich darin, neben anderen das Betriebsverhalten eines Kraftfahrzeugs kennzeichnenden Größen wenigstens Geschwindigkeiten, zurückgelegte Strecken sowie Fahrzeiten vorzugsweise visuell erkennbar aufzuzeichnen und, was allgemein üblich ist, die Fahrzeiten der besseren Lesbarkeit wegen in Form von Balkendiagrammen darzustellen.

Über lange Zeit war es ausreichend, die für diesen Zweck vorgesehenen Fahrzeitschreiber mittels Rüttelpendel anzutreiben, wobei das Feder-Masse-System derartiger Rüttelpendel für die zu erwartenden fahrbahnabhängigen Fahrzeugschwingungen ausgelegt war. Aufgrund fahrzeugseitiger Verbesserungen mußte jedoch in neuerer Zeit - trotz vielfacher und aufwendiger Bemühungen, die Schwingungsfähigkeit der Rüttelpendel auch im Hinblick auf die unterschiedlichen Einbaulagen zu erhöhen, beispielsweise die Schwingungen eines Rüttelpendels durch zusätzliches, zwangsweise erfolgendes, impulsweises Anstoßen des Pendels aufrechtzuerhalten - in Kauf genommen werden, daß den Rüttelpendeln insbesondere auf relativ guten Straßen nicht mehr ausreichend Antriebsenergie zur Verfügung stand und die erzielbaren Balkendiagramme teils eine ungleichmäßige Strichdichte, teils "ausgefranst" aufgezeichnet wurden. Da gleichzeitig die Forderung aufkam, daß diese Fahrzeitdiagramme auch maschinell auszählbar sein sollten, somit also an die Toleranzhaltung hinsichtlich der Balkenbreite und hinsichtlich einer lückenlosen Aufzeichnung des Balkendiagramms strenge Anforderungen zu stellen waren, erwiesen sich Rüttelpendel als Antriebselement für Fahrzeitschreiber nicht mehr geeignet. Nun liefern zwar die heute allgemein üblichen wegabhängig oder elektromechanisch angetriebenen Fahrzeitschreiber einwandfrei auswertbare Balkendiagramme, eine wesentliche Aussage ist jedoch mit dem Verzicht auf den Rüttelpendelantrieb verloren gegangen. Gemeint ist der unbestechliche Nachweis darüber, daß ein Fahrzeug, bei dem die Antriebsverbindung, sei es die elektrische Verbindung zu einem dem Fahrtschreiber zugeordneten, elektrischen Geber, oder sei es die altbekannte biegsame Welle, in schadhafter oder mißbräuchlicher Weise unterbrochen war, benutzt worden ist. Auf der anderen Seite ist aber in den modernen Fahrtschreibern, wo wegen der Fülle von Registrieraufgaben ohnehin eine Mehrfachbelegung der vorhandenen Registrierorgane erforderlich ist, die zusätzliche Anordnung eines rüttelpendelbetätigten Registrierorgans, vom Aufwand abgesehen, infolge der verhältnismäßig beschränkten räumlichen Möglichkeiten und der weitgehend genutzten Aufzeichnungfläche der als Aufzeichnungsträger dienenden Diagrammscheiben nicht zu verwirklichen.

Somit war der vorliegenden Erfindung die Aufgabe gestellt, eine auch bei Unterbrechung der elektrischen und/oder mechanischen Antriebsverbindungen eines Fahrtschreibers wirksame Kontrollvorrichtung zu schaffen, mit welcher zweifelsfrei eine Benutzung des Fahrzeugs nachweisbar ist und welche mit einem Minimum an Raumbedarf und konstruktivem Aufwand verwirklicht werden kann.

Die Lösung dieser Aufgabe sieht vor, daß das Rüttelpendel in der Null-Lage eines im Fahrtschreiber angeordneten, geschwindigkeitsabhängig auslenkbaren Registrierorgans mechanisch mit diesem in Wirkverbindung steht

Ein bevorzugtes Ausführungsbeispiel, welches vorteilhaft anwendbar ist bei Fahrtschreibern mit einem über ein Zahnradgetriebe mit dem Geschwindigkeitsmeßwerk verbundenen Geschwindigkeitsregistrierorgan, dessen Nullanschlag derart gewählt ist, daß es in seiner Null-Lage einerseits von dem üblichen, der Unterdrückung eines gewissen Anfangsmeßbereichs dienenden Drehmoment unbelastet ist, andererseits das bestehende Getriebespiel durch eine entsprechend dimensionierte, an dem Geschwindigkeitsregistrierorgan angreifende Feder ausgeglichen ist, ist dadurch gekennzeichnet, daß das Rüttelpendel derart angeordnet ist, daß es dem unter der Wirkung der Spielausgleichsfeder stehenden und innerhalb des Getriebespiels leicht beweglichen Geschwindigkeitsregistrierorgan als Anschlag dient.

Abgesehen davon, daß es an sich bekannt ist, auch das Geschwindigkeitsregistrierorgan eines Fahrtschreibers mehrfach zu nutzen und mit dem in geeigneter Weise elektromechanisch betätigten Geschwindigkeitsregistrierorgan bei Stillstand des Fahrzeugs Zeitregistrierungen beispielsweise für Reparatur- oder Be- und Entladearbeiten vorzunehmen, ist der entscheidende Vorteil, den die Erfindung bietet, darin zu sehen, daß auch für die angestrebte Fahrtkontrolle kein zusätzliches Registrierorgan erforderlich ist. Somit ist eine besondere Eignung für solche Fahrtschreiber gegeben, die wegen der maschinellen Auswertbarkeit der Balkendiagramme mit zwangsläufig betätigten, also von elektrischen und/oder mechanischen Antriebsverbindungen der Fahrtschreiber abhängigen Fahrzeitschreibern ausgerüstet sind. Ferner sind, da für die gewünschte Aussage die Aufzeichnungen der erfindungsgemäßen Vorrichtung durchaus lückenhaft sein können und auch keine besonderen Bedingungen hinsichtlich der Registrierbreite gestellt werden müssen, die Anforderungen bezüglich der Empfindlichkeit des Rüttelpendels relativ gering, so daß eine einfache Ausbildung und Lagerung des Rüttelpendels gewählt werden und auf zusätzliche zwangsbetätigte Mittel zur Schwingungserhaltung verzichtet werden kann. Auch stellt das Rüttelpendel, wenn Vorkehrungen zu dessen Lagerung getroffen worden sind, eine wahlweise und ohne besonderen Montageaufwand einbaufähige Zusatzeinrichtung dar, wobei es, weil die Fahrtkontrollvorrichtung ohnehin nur in der Nullage des Geschwindigkeitsregistrierorgans wirksam ist, bedeutungslos ist, ob als Geschwindigkeitsregistrierorgan ein geradlienig geführter Schlitten oder ein drehbar gelagerter, unter Umständen mit einer Lenker-Geradführung ausgebildeter Registrierarm vorgesehen ist.

Besonders vorteilhaft hinsichtlich der erforderlichen Schwingungsfähigkeit und somit hinsichtlich einer Vereinfachung und Verkleinerung des Rüttelpendels wirkt sich im Gegensatz zu einem unter einem bestimmten Anfangsmeßmoment, das üblicherweise der Unterdrückung eines bestimmten Anfangsmeßbereichs dient, an einem festen Anschlag anliegenden Geschwindigkeitsregistrierorgan gemäß dem bevorzugten Ausführungsbeispiel die wenigstens teilweise Nutzung des zwischen dem Geschwindigkeitsmeßwerk und dem Geschwindigkeitsregistrierorgan befindlichen Getriebespiels aus. Dieses Getriebespiel, das dadurch entsteht, daß einerseits zwischen dem Geschwindigkeitsmeßwerk und dem Geschwindigkeitsregistrierorgan ein Zahnradgetriebe vorgesehen ist, andererseits der Nullanschlag des Geschwindigkeitsmeßwerks nicht durch das Geschwindigkeitsregistrierorgan erfolgt, sondern an den Eingang des Getriebezuges zwischen dem Geschwindigkeitsmeßwerk und dem Geschwindigkeitsregistrierorgan gelegt ist, bewirkt, weil es lediglich durch eine schwache Feder ausgeglichen ist, daß das Geschwindigkeitsregistrierorgan in der Nullage besonders leicht bewegbar und somit das Rüttelpendel innerhalb der Grenzen des Getriebespieles nur wenig belastet ist. Das Rüttelpendel wird in diesem Falle vorzugsweise derart justiert, daß das unter der Wirkung der Spielausgleichsfeder stehende Geschwindigkeitsregistrierorgan nicht am Nullanschlag des Geschwindigkeitsmeßwerks sondern von diesem "angehoben" an einem am Rüttelpendel ausgebildeten Hubarm bzw. einem geeigneten Übertragungsglied anliegt, wenn sich das Rüttelpendel in seiner Ruhelage befindet. Im übrigen kann das Getriebespiel aufgrund der verwendeten Spielausgleichsfeder, die bewirkt, daß bei Vor- und Rücklauf des Geschwindigkeitsregistrierorgans kein Flankenwechsel in dem antreibenden Getriebe erfolgt, durch unvollständig ausgebildete Zahnformen vergrößert werden.

Im folgenden sei die Erfindung anhand der beigefügten Zeichnungen näher erläutert. Dabei zeigen

FIG. 1 eine Draufsicht auf das bevorzugte Ausführungsbeispiel einer Fahrtkontrollvorrichtung gemäß Anspruch 2,

FIG. 2 die Teildarstellung einer weiteren erfindungsgemäßen Kombination eines Rüttelpendels mit einem Geschwindigkeitsregistrierorgan,

FIG. 3 einen Diagrammscheibenausschnitt mit einem Aufzeichnungsbeispiel.

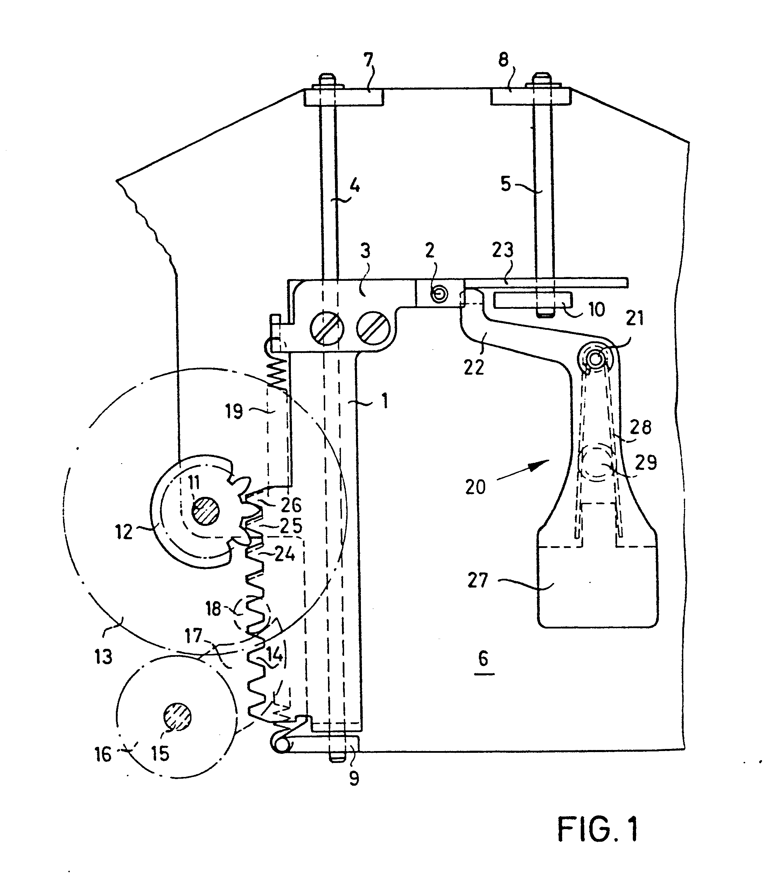

Wie FIG. 1 zeigt, ist in dem betreffenden Fahrtschreiber, in dem die erfindungsgemäße Fahrtkontrollvorrichtung ausgebildet ist, ein Geschwindigkeitsregistrierorgan vorgesehen, welches in Form eines Schlittens 1, auf dem ein einen gefedert gelagerten Schreibstift 2 tragender Halter 3 befestigt ist, auf geeigneten Führungsstangen 4 und 5 verschiebbar gelagert ist. Die Führungsstangen 4 und 5 ihrerseits sind in einem im wesentlichen nur angedeuteten und von den nicht erfindungswesentlichen Elementen freigemachten Gestell 6 bzw. an dem Gestell ausgebildeten Ansätzen 7, 8, 9 und 10 gehalten. Ferner zeigt FIG.1, daß an dem Gestell 6, das zusammen mit den auf ihm gelagerten bzw. angeordneten Elementen als vorgefertigte Funktionsgruppe in den Fahrtschreiber einsetzbar ist, eine Achse befestigt ist. Auf dieser ist ein Zahnradsatz 12, 13 gelagert, welcher einerseits über das Zahnrad 12 in Eingriff steht mit einer am Schlitten 1 ausgebildeten Verzahnung 14, andererseits über das Zahnrad 13 getrieblich verbunden ist mit einem auf der Meßwerkwelle 15 befestigten Zahnrad 16. Eine vorzugsweise an dem Zahnrad 16 ausgebildete Fahne 17 und ein am Zahnrad 13 vorgesehener Bolzen 18 stellen die Mittel dar für einen bei dieser Ausführungsform beweglichen Nullanschlag eines nicht dargestellten, beispielsweise nach dem Wirbelstromprinzip arbeitenden Geschwindigkeitsmeßwerks. Der sozusagen innerhalb der getrieblichen Verbindung zwischen der Meßwerkwelle 15 und, dem Schlitten 1 "vorverlegte" Nullanschlag bewirkt, daß der Schlitten 1 um das Maß des Getriebespiels zwischen dessen Verzahnung 14 und dem durch den Nullanschlag festgelegten Zahnrad 12 frei beweglich bleibt, jedoch mit der Einschränkung, daß er unter der Wirkung einer dieses Spiel einseitig ausgleichenden, schwach dimensionierten Zugfeder 19 steht, die einerseits am Gestell 6, andererseits am Schlitten 1 angreift.

Ein Rüttelpendel 20, das auf einer weiteren im Gestell 6 befestigten Achse 21 schwenkbar gelagert ist und an dem ein Hubarm 22 ausgebildet ist, kann nun derart justiert sein, daß der am Schlitten 1 ausgebildete Steg 23 in der dargestellten Ruhelage des Rüttelpendels 20 dessen Hubarm 22 gerade berührt, wenn, wie dargestellt, das Getriebespiel zwischen dem Zahnrad 14 und dem Schlitten 1 einseitig ausgeglichen ist. Das Rüttelpendel 20 kann aber auch derart justiert sein, daß es dem unter der Wirkung der Zugfeder 19 stehenden Schlitten 1 als Anschlag dient und das Getriebespiel beispielsweise gemittelt ist. Ferner sei noch erwähnt, daß, falls erforderlich, das für die Rüttelbewegung nützbare Getriebespiel durch unvollständiges Ausbilden der Zähne 24, 25, 26 der Schlittenverzahnung 14 (strichpunktiert dargestellt) vergrößert werden kann, was aufgrund des stetigen einseitigen Spielausgleichs durch die Zugfeder 19 auf die Genauigkeit der Geschwindigkeitsaufzeichnungen ohne Ein fluß wäre. Der Vollständigkeit halber sei noch darauf hingewiesen, daß der Pendelmasse 27 des Rüttelpendels 20 eine auf der Achse 21 gelagerte Schenkelfeder 28 zugeordnet ist, deren Schenkel beim Schwingen des Rüttelpendels 20 wechselweise an einem am Gestell 6 befestigten Bolzen 29 anliegen.

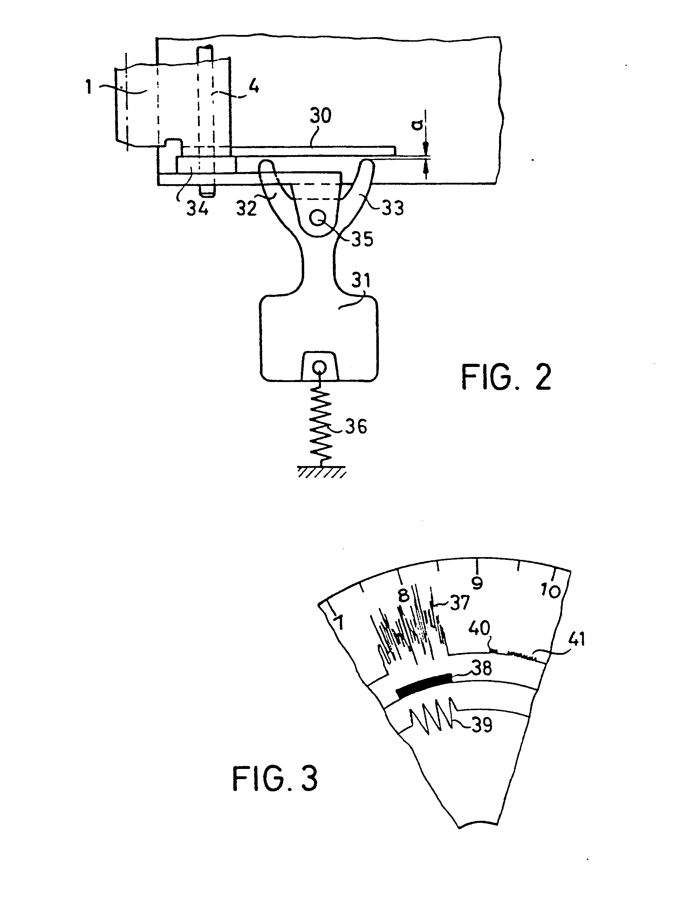

Demgegenüber ist gemäß FIG. 2 am Schlitten 1 ein Betätigungsarm 30 angeformt, über den die an einem Rüttelpendel 31 ausgebildeten Hebelarme 32 und 33 wirksam werden können. Dabei ist zwischen den Hebelarmen 32 und 33 und dem Betätigungsarm 30 ein geringes Spiel a vorgesehen, um, geht man davon aus, daß bei diesem Ausführungsbeispiel der Schlitten 1 unter der Wirkung der nicht gezeichneten Meßsystemfeder mit einer gewissen der Unterdrückung eines bestimmten Anfangsmeßbereichs dienenden Vorspannung an einem am Gestell 6 angeformten Anschlag 34 anleigt, das Anschwingen des Rüttelpendels 31 zu erleichtern. Das mit dem Rüttelpendel 31, das ebenfalls auf einer im Gestell 6 befestigten Achse 35 schwenkbar gelagert ist, zusammenwirkende elastische Glied bildet in diesem Falle die Zugfeder 36.

Der Diagrammscheibenausschnitt (FIG. 3) zeigt neben einem ordnungsgemäß aufgezeichneten Geschwindigketisdiagramm 37, dem in der üblichen Weise ein als Balkendiagramm dargestelltes Fahrzeitdiagramm 38 sowie ein Streckendiagramm 39 zugeordnet sind, zwei der vom Geschwindigkeitsregistrierorgan aufgezeichneten Null-Linie überlagerte Diagramme 40 und 41, die eine Benutzung des Fahrzeuges bei unterbrochenen Antriebsverbindung zum Fahrtschreiber kenntlich machen.

## Patentansprüche

1. Fahrtschreiber mit einem geschwindigkeitsabhängig auslenkbaren Registrierorgan (1) sowie mit auf betriebsbedingte Schwingungen eines Kraftfahrzeuges ansprechenden und unter der Wirkung einer Feder (28, 36) stehenden Rüttelpendel (20, 31), dadurch gekennzeichnet, daß als Rüttelpendel (20, 31) lediglich eine frei schwingungsfähig gelagerte Masse vorgesehen ist und

daß das Rüttelpendel (20, 31) im Fahrtschreiber derart angeordnet ist, das es in der Nullage des Geschwindigheit-Registrierorgans (1) mit diesem in Wirkverbindung steht.

2. Fahrtschreiber nach Anspruch 1, dadurch gekennzeichnet, daß ein über ein Zahnradgetriebe (12, 13, 16) mit dem Geschwindigkeitsmeßwerk verbundenes Geschwindigkeitsregistrierorgan (1) vorgesehen ist, dessen Nullanschlag (17, 18) derart gewählt ist, daß es in seiner Null-Lage einerseits von dem üblichen, der Unterdrückung eines gewissen Anfangsmeßbereichs dienenden Drehmoment unbelastet ist, andererseits das bestehende Getriebespiel durch eine entsprechend dimensionierte, an dem Geschwindigkeitsregistrierorgan (1) angreifende Feder (19) ausgeglichen ist, daß das Rüttelpendel (20) derart angeordnet ist, daß es dem unter der Wirkung der Spielausgleichsfeder (19) stehenden und innerhalb des Getriebespieles leicht beweglichen Geschwindigkeitsregistrierorgan als Anschlag dient.

3. Fahrtschreiber nach Anspruch 1, dadurch gekennzeichnet, daß das Geschwindigkeitsregistrierorgan in an sich bekannter Weise als ein verschiebbar gelagerter, einen Registrierstift (2) tragender Schlitten (1) ausgebildet und gemeinsam mit dem Rüttelpendel (20, 31) in einem in den Fahrtschreiber einsetzbaren Gestell (6) angeordnet ist und daß in der Null-Lage des Schlittens (1) und der Ruhelage des Rüttelpendels (20, 31) zwischen wenigstens einem am Rüttelpendel (20, 31) ausgebildeten Hubarm (22, 32) und dessen Angriffspunkt am Schlitten (1) Spiel (a) vorgesehen ist.

## Claims

1) Tachograph having a recording means (1) to be deflected in dependence on speed as well as a vibratory pendulum (20, 31) being under the action of a spring (28, 36) and serving to record operational oscillations of the motor vehicle, characterized in

that as the vibratory pendulum (20, 31) a mass only is provided mounted to oscillate freely and in

that the vibratory pendulum (20, 31) is arranged in such manner in the tachograph, that in the zero position of the speed recording device it is in operative connection therewith.

2) Tachograph according to Claim 1, characterized in

that the speed recording means (1) is provided which is connected via a toothed wheel gearing (12, 13, 16) with the speed measuring means the zero stop (17, 18) of which recording means being chosen so that in its zero position it is on the one hand not influenced by the torque serving to suppress a certain initial measuring range and on the other hand so that a spring (19) of corresponding dimension serves to counteract the existing gear play cooperating with the speed recording means (1)

and in that the vibratory pendulum (20) is arranged in such manner that it serves as a stop to the speed recording means (1) being under the action of the play counter-acting spring (19) and movable within the gear play.

3) Tachograph according to Claim 1, characterized in that the speed recording means is arranged in known manner in a slide (1) carrying a movably mounted recording pencil (2) and is arranged together with the vibratory pendulum (20, 31) in a support (6) mounted in the tachograph and in that in the zero position of the slide (1) and the rest position of the vibratory pendulum (20, 31) there is gear play (a) at least between an arm (22, 32) at the vibratory pendulum (20, 31) and its acting point at the slide (1).

## Revendications

1) Enregistreur de route avec un organe enregistreur (1) pouvant être dévié en fonction de la vitesse ainsi qu'avec un balancier capteur de secousses (20, 31) répondant à des vibrations dues au fonctionnement d'un véhicule automobile et subissant l'action d'un ressort (28, 36), caractérisé par le fait

que, comme balancier capteur de secousses (20, 31), seule est prévue une masse montée de façon à pouvoir osciller librement et soumise à l'action d'un ressort (28, 36) et

que le balancier capteur de secousses (20, 31) est disposé dans l'enregistreur de route de telle sorte qu'il coopère avec l'organe enregistreur de vitesse (1) lorsque celui-ci se trouve à la position zéro.

2) Enregistreur de route selon la revendication 1, caractérisé par le fait

qu'un organe enregistreur de vitesse relié au mécanisme de mesure de vitesse par l'intermédiaire d'un train d'engrenages (12, 13, 16) est prévu dont la butée de zéro (17, 18) est choisie de telle sorte que, dans sa position zéro, il ne soit pas soumis, d'une part, au couple de rotation habituel servant à la suppression d'une certaine zone de mesure initiale et que, d'autre part, le jeu des éléments d'engrenage existant soit compensé par un ressort (19) dimensionné en conséquence qui agit sur l'organe enregistreur de vitesse (1),

que le balancier capteur de secousses (20) est disposé de manière à servir de butée à l'organe enregistreur de vitesse soumis à l'action du ressort compensateur de jeu (19) et facilement déplaçable dans les limites du jeu des éléments d'engrenage.

3) Enregistreur de route selon la revendication 1, caractérisé par le fait

que l'organe enregistreur de vitesse est réalisé, d'une manière en soi connue, sous form d'un chariot (1) monté mobile, portant un stylet enregistreur (2) et que ledit organe est disposé conjointement avec le balancier capteur de secousses (20, 31) dans un bâti (6) encastrable dans l'enregistreur de route et que, dans la position zéro du chariot (1) et la position de repos du balancier capteur de secousses (20, 31), un jeu (a) est prévu entre au moins un bras de levage (22, 32) formé sur le balancier capteur de secousses (20, 31) et le point d'action de celui-ci sur le chariot (1).

FIG.1

FIG. 2

FIG. 3